# FASCICULE DE BREVET EUROPEEN

(11) **EP 2 627 958 B1**
(45) Date de publication et mention de la délivrance du brevet: **23.11.2016**
(21) Numéro de dépôt: 11779738.1
(22) Date de dépôt: 11.10.2011
(51) Int. Cl.: F25D 29/00, A47J 36/32, A23L 3/01, A23L 3/36

(54) **DISPOSITIF DE CONDITIONNEMENT EN TEMPÉRATURE D'UN OBJET**
VORRICHTUNG ZUR THERMISCHEN KONDITIONIERUNG EINES OBJEKTS
DEVICE FOR THERMALLY CONDITIONING AN OBJECT

(30) Priorité: 11.10.2010 FR 1004009
(43) Date de publication de la demande: 21.08.2013
(73) Titulaire: Meunier, Hugo, 2680 Luxembourg (LU); Meunier, Manon, 2680 Luxembourg (LU)
(72) Inventeur: Meunier, Hugo, 2680 Luxembourg (LU); Meunier, Manon, 2680 Luxembourg (LU)
(74) Mandataire: Oudin, Stéphane
(86) Numéro de dépôt international: PCT/FR2011/000549
(87) Numéro de publication internationale: WO 2012/049379

(56) Documents cités:
- EP-A1- 1 193 584
- EP-A1- 1 209 489
- WO-A2-2009/080344

## Description

### Domaine technique

La présente invention concerne un dispositif de conditionnement en température d'objet, en particulier d'un récipient contenant une préparation alimentaire. Dans la présente demande, on entend par « conditionnement en température », l'élévation ou l'abaissement de la température. Il peut ainsi s'agir de réchauffement, par exemple pour obtenir une cuisson. Il peut également s'agir de refroidissement, par exemple pour obtenir une congélation.

### Technique antérieure

Il existe de nombreuses machines de conditionnement utilisées par exemple pour le chauffage de préparations alimentaires, telles que par exemple les appareils micro-ondes, les cuiseurs vapeurs. Ces machines sont destinées à être utilisées dans des restaurants, par des services de restauration collective ou par des particuliers. Ces machines peuvent également être mises à disposition, par exemple dans des lieux de restauration libre, dans des entreprises ou des hôtels. Ainsi, les employés ou les personnes de passage peuvent utiliser ces machines de conditionnement pour réchauffer leur repas, que ce repas soit amené de l'extérieur ou acheté sur place. En particulier, les chambres d'hôtel peuvent être équipées individuellement de ce genre de machines. Il est néanmoins impossible, avec de telles machines proposées en libre service, de contrôler leur utilisation et de la limiter au conditionnement d'objets prévus à cet effet. De plus, il n'est également pas possible de s'assurer que les repas réchauffés sont bons à consommer. Enfin, ces machines proposées en libre service ne permettent pas de limiter leur utilisation au réchauffage de plats vendus sur le lieu de consommation ni de garantir de manière plus large la qualité et la provenance des plats réchauffés. Les personnes sont donc libres d'amener leurs propres plats et de les réchauffer au moyen de ces machines proposées en libre service. Ceci représente un manque à gagner notable par exemple pour les hôtels ne disposant pas de service de restauration ou dont les horaires d'ouverture sont limités.

Pour pallier en partie ces inconvénients, on connait déjà un système de cuisson tel que celui décrit dans la demande de brevet européen EP 1 193 584 et comprenant un four et des moyens pour détecter des données d'aliment et pour ajuster en conséquence un procédé de chauffage. Toutefois, ledit système ne permet, en aucun cas, de garantir la provenance et la qualité des objets.

### Exposé de l'invention

La présente invention vise à remédier à ces inconvénients en proposant un dispositif de conditionnement en température d'objet permettant de contrôler l'utilisation d'une machine de conditionnement, de garantir la provenance et la qualité des objets conditionnés en particulier lorsqu'il s'agit de préparations alimentaires à réchauffer.

L'invention concerne un dispositif de conditionnement en température chaude ou froide d'une préparation alimentaire comportant au moins un objet étant un bocal, contenant ladite préparation alimentaire et comportant au moins un marqueur RFID, et une machine de conditionnement pourvue de moyens de conditionnement couplés à des moyens de commande et comprenant des moyens de contrôles pourvus d'au moins un récepteur RFID apte à lire des données dudit marqueur RFID et au moins un émetteur RFID apte à émettre un signal d'incrémentation reçu par ledit marqueur RFID, lesdits moyens de contrôles étant couplés auxdits moyens de commande et agencés pour n'autoriser le conditionnement de la préparation alimentaire que sous condition de la reconnaissance par ledit récepteur RFID de données portées par ledit marqueur RFID et de la correspondance de ces dernières à des données préétablies enregistrées par lesdits moyens de contrôle, lesdites données portées par ledit marqueur RFID comprenant les informations suivantes :
- l'identification dudit objet et/ou de son contenu,
- la date limite de consommation/d'utilisation dudit objet et/ou de son contenu,
- le nombre de conditionnement(s) préalablement subi(s) par ledit objet au moyen de ladite machine de conditionnement incrémenté par l'émetteur RFID à chaque cycle de conditionnement,
- la provenance dudit objet et/ou de son contenu, et
- le temps de conditionnement recommandé pour ledit objet et son contenu,
lesdits moyens de contrôle dudit dispositif comportant au moins une horloge interne et étant agencés pour interdire la mise en marche desdits moyens de conditionnement lorsque ledit nombre de conditionnement(s) préalablement subi(s) dudit objet a atteint une valeur prédéterminée enregistrée par lesdits moyens de contrôle ou lorsque la date du jour d'utilisation de ladite machine de conditionnement détectée par ledit récepteur RFID a dépassé ladite date de limite de consommation portée par le marqueur RFID dudit objet de sorte à contrôler l'utilisation de ladite machine de conditionnement afin de garantir la qualité et la provenance desdites préparations alimentaires à conditionner.

Dans la suite de la description, on entend par puce RFID (Radio Frequency IDentification en anglais ou radio-identification en français), une puce électronique comportant un circuit électronique miniature. On entend par émetteur RFID un émetteur utilisant la technologie RFID et apte à émettre des informations permettant de paramétrer une puce RFID. On entend par récepteur RFID un récepteur utilisant la technologie RFID et apte à reconnaître et à lire les données contenues dans une puce RFID.

L'objet peut être pourvu d'au moins une étiquette comportant le marqueur RFID. L'objet peut également comporter au moins un marqueur RFID intégré à l'objet.

Selon un mode de réalisation préféré, les moyens de conditionnement comportent au moins une machine de conditionnement choisie dans le groupe comprenant au moins un cuiseur vapeurs, un équipement de surcongélation.

Les moyens de contrôle sont avantageusement agencés pour faire fonctionner les moyens de conditionnement pendant le temps de conditionnement recommandé porté par le marqueur RFID de l'objet et détecté par le récepteur RFID.

De manière particulièrement avantageuse, le dispositif selon l'invention comporte une pluralité de machines de conditionnement et une pluralité d'objets.

Les moyens de contrôle sont avantageusement agencés pour limiter le temps de fonctionnement des moyens de conditionnement au temps de conditionnement recommandé pour l'objet, ce temps de conditionnement recommandé étant porté par le marqueur RFID et détecté par le récepteur RFID de la machine de conditionnement.

### Description sommaire des dessins

L'invention est décrite ci-après, à titre d'exemple non limitatif, en référence aux dessins annexés sur lesquels :
- La figure 1 est une vue schématique du dispositif de conditionnement en température d'objet selon l'invention avant l'étape de conditionnement, la machine de conditionnement et l'objet à conditionner étant représentés séparément ;
- La figure 2 est une vue schématique du dispositif de conditionnement en température d'objet selon l'invention pendant l'étape de conditionnement au cours de laquelle, l'objet à conditionner est reçu dans la machine de conditionnement.

### Meilleure manière de réaliser l'invention

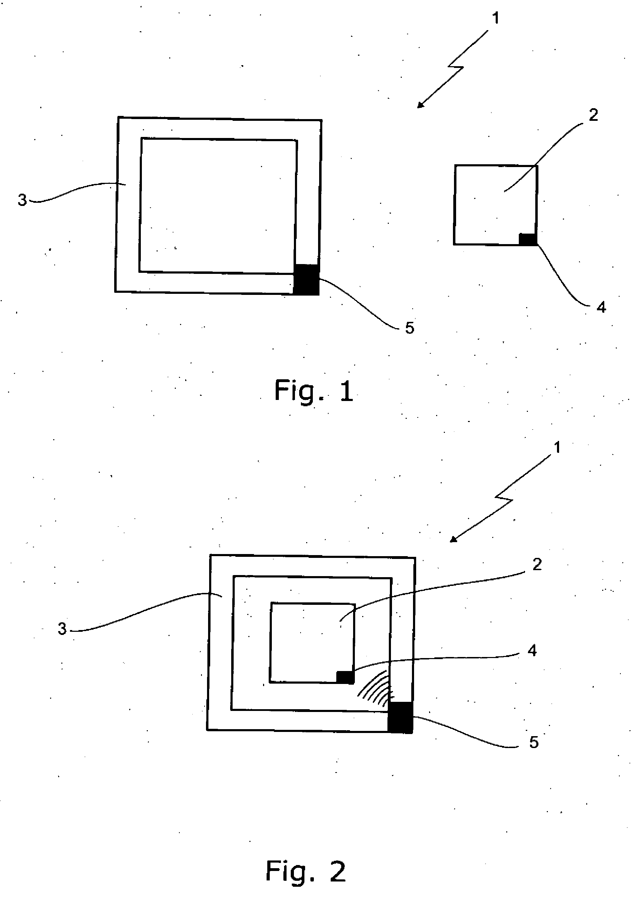

En référence aux figures 1 et 2, le dispositif 1 de conditionnement en température d'objet selon l'invention comporte une machine de conditionnement 3 et au moins un bocal 2 contenant une préparation alimentaire et formant l'objet à conditionner en température. Dans cet exemple, la machine de conditionnement 3 est un cuiseur vapeur de type traditionnel, schématisée par un double rectangle. Ce type de machine de conditionnement 3 permet un chauffage efficace de la préparation alimentaire tout en conservant sa qualité gustative.

Le bocal 2 est par exemple réalisé en verre et comporte un marqueur RFID 4, dans cet exemple noyé dans le verre. Le marqueur RFID 4 comporte une puce de silicium, une antenne et un substrat et/ou une encapsulation (non détaillés sur les figures). L'antenne permet au marqueur RFID 4 de recevoir et de répondre aux requêtes radio émises depuis un émetteur-récepteur RFID. Le marqueur RFID 4 peut ainsi stocker différentes données et autoriser leur accès en lecture et/ou écriture. Ces données sont par exemple relatives à la préparation alimentaire contenue dans le bocal 2 tel que par exemple son identification, sa composition, sa date de préparation, sa date d'emballage, sa provenance, sa date limite de consommation, le temps de conditionnement recommandé. Le marqueur RFID 4 peut également stocker et donner accès en lecture et écriture à des données relatives au bocal 2 lui-même, tel que par exemple le nombre de conditionnement(s) préalablement subi(s) par le bocal 2 au moyen de la machine de conditionnement 3. Chaque bocal 2 est avantageusement pourvu d'un couvercle, par exemple en forme de cloche rappelant les cloches utilisées dans la haute restauration.

La machine de conditionnement 3 comporte une enceinte au sein de laquelle un récipient, par exemple un bocal 2 peut être disposé. La machine de conditionnement 3 comporte des moyens de conditionnement (non représentés), par exemple un bain marie. Ces moyens de conditionnement sont couplés à des moyens de commande (non représentés), aptes à commander le fonctionnement des moyens de conditionnement pour provoquer le conditionnement (élévation en température) du bocal 2 et en particulier de son contenu. La machine de conditionnement 3 comporte également des moyens de contrôle 5 comportant au moins un récepteur RFID aptes à lire les données du marqueur RFID 4.

Les moyens de contrôle 5 sont couplés aux moyens de commande afin de n'autoriser le conditionnement que sous certaines conditions telles que par exemple :
- le non dépassement de la date limite de consommation,
- le non dépassement d'un nombre de réchauffements préétablis.

Afin de vérifier le non dépassement de la date limite de consommation, les moyens de contrôle 5 comportent une horloge interne et des moyens de comparaison permettant de comparer la date de l'horloge interne et la date de limite de consommation porté par le marqueur RFID 4 et détectée par le récepteur RFID 5.

La machine de conditionnement 3 comporte de plus un émetteur RFID apte à incrémenter, à chaque cycle de conditionnement, le nombre de conditionnement(s) préalablement subi(s) enregistré dans le marqueur RFID 4 du bocal 2. Ainsi, afin de vérifier le non dépassement du nombre de réchauffements préétablis, les moyens de comparaison vérifient que le nombre de conditionnement(s) préalablement subi (s) par le bocal 2, nombre porté par le marqueur RFID 4 et détecté par le récepteur RFID 5, n'atteint pas la limite fixée.

Les moyens de commande sont prévus automatiques ou semi-automatiques. Dans le premier cas, une fois que le bocal 2 est reçu dans l'enceinte de la machine de conditionnement 3, et que les moyens de contrôle 5 ont vérifié que les conditions de fonctionnement sont remplies, le conditionnement démarre de manière automatique. Une temporisation peut être prévue avant le démarrage du conditionnement. Dans le second cas, la machine de conditionnement 3 est pourvue d'un interrupteur (non représenté) pouvant intégrer un voyant lumineux qui s'allume quand les conditions de fonctionnement sont remplies. L'utilisateur est alors libre d'enclencher le démarrage du conditionnement en appuyant sur cet interrupteur. Une temporisation peut également être prévue pour éteindre l'interrupteur après un laps de temps donné et éviter ainsi que la machine de conditionnement 3 ne soit laissée trop longtemps avec son interrupteur allumé sans toutefois être utilisée. Le cycle de conditionnement (contrôle et conditionnement) peut être ré-initié par l'utilisateur en retirant le bocal 2 de l'enceinte et en le replaçant dedans.

Les moyens de contrôle 5 sont aptes à détecter le temps de conditionnement recommandé, temps porté par le marqueur RFID 4 et détecté par le récepteur RFID 5, et à faire fonctionner la machine de conditionnement 3 pendant une durée correspondant à ce temps de conditionnement recommandé.

On décrit ci-après le procédé de conditionnement en température mis en oeuvre dans le dispositif 1 décrit précédemment. Ce procédé est utilisé, par exemple dans un hôtel dont les chambres sont équipées individuellement de machines de conditionnement 3. Un choix de bocaux 2 contenant différentes préparation alimentaires peut être prévu à la réception de l'hôtel ou dans un distributeur automatique mis à disposition à l'accueil. Chaque personne est ainsi libre de récupérer un bocal 2 de son choix pour le faire réchauffer dans sa chambre. L'utilisateur retire le couvercle du bocal 2 et place le bocal 2 dans la machine de conditionnement 3. Le récepteur RFID 5 de la machine de conditionnement 3 reconnaît alors le marqueur RFID 4 du bocal 2. Au cours de cette étape de reconnaissance, les moyens de contrôle 5 vérifient la date de limite de consommation et le nombre de conditionnement(s) préalablement subi(s) par le bocal 2 au moyen d'une machine de conditionnement 3 de même type. Au cours de cette même étape de reconnaissance, les moyens de contrôle 5 enregistrent le temps de conditionnement recommandé.

Si la date limite de consommation portée par le marqueur RFID 4 détectée par le récepteur RFID 5 est dépassée par la date de l'horloge interne de la machine de conditionnement 3, alors les moyens de contrôle 5 empêchent que le conditionnement ne puisse démarrer. On évite ainsi que des préparations alimentaires périmées puissent être réchauffées pour être consommées. De même, si le nombre de conditionnement(s) préalablement subi(s), enregistré dans le marqueur RFID 4 du bocal 2 et détecté par le récepteur RFID 5, est dépassé, les moyens de contrôle 5 empêchent que le conditionnement ne puisse démarrer. On évite ainsi que des personnes ne gardent des bocaux 2 pour les remplir de leurs propres préparations alimentaires sans racheter les bocaux 2 proposés par l'hôtel. La provenance et la qualité du contenu des bocaux 2 est ainsi garantie. Il est bien entendu que le nombre de conditionnements subis par l'objet 2 tient compte de tous les conditionnements préalables effectués par toute machine de conditionnement 3 similaire.

Lorsque la date limite de consommation et le nombre de conditionnement(s) préalablement subi(s), vérifiés par le récepteur RFID 5 de la machine de conditionnement 3 remplissent les conditions préétablies, les moyens de contrôle 5 autorisent le démarrage du conditionnement. Dans le cas d'une machine de conditionnement 3 automatique, les moyens de contrôle 5 agissent directement pour déclencher les moyens de conditionnement. Dans le cas d'une machine de conditionnement 3 semi-automatique, les moyens de contrôle 5 ferment une portion de circuit qui permettra, lorsque l'utilisateur appuiera sur l'interrupteur, de mettre en marche les moyens de conditionnement.

Pendant le conditionnement, par exemple au début, l'émetteur RFID de la machine de conditionnement 3 émet un signal d'incrémentation qui, une fois reçu par le marqueur RFID 4 du bocal 2 incrémente le nombre de conditionnement(s) préalablement subi(s) par le bocal 2 enregistré. Ce nombre incrémenté pourra ainsi être vérifié avant le prochain conditionnement du bocal 2 pour limiter le nombre de réutilisation de ce bocal 2.

Les moyens de conditionnement restent en marche pendant le temps de conditionnement recommandé détecté par les moyens de contrôle 5. La préparation alimentaire peut ainsi subir un temps de conditionnement optimal. Des moyens coupe circuit (non représentés) peuvent être incorporés dans la machines de conditionnement 3 afin d'arrêter ou de suspendre le conditionnement si le bocal 2 est retiré de l'enceinte.

De manière optionnelle, la machine de conditionnement 3 peut comporter des moyens de mesure de température permettant de contrôler la température maximale de conditionnement. Les moyens de contrôle 5 peuvent autoriser l'actionnement successif, dans un laps de temps prédéfini, de l'interrupteur afin de lancer deux conditionnements successifs. Dans ce cas, les moyens de contrôle de la température peuvent être utilisés pour détecter la température du bocal 2 après le premier conditionnement et ainsi adapter la durée du second conditionnement. Les conditionnements successifs sont utiles par exemple lorsqu'après avoir lancé le conditionnement, l'utilisateur est interrompu dans sa préparation, par exemple s'il reçoit un appel téléphonique. Si l'interruption dure longtemps, l'utilisateur peut ainsi reconditionner le bocal. Il peut ainsi manger la préparation alimentaire à une température optimale et non refroidie.

### Autres modes de réalisation

Dans une variante de réalisation non représentée, le bocal comporte une étiquette comportant le marqueur RFID. On parle alors de radio-étiquettes, par exemple collée à l'objet.

Dans d'autres modes de réalisation non représentés, le dispositif de conditionnement en température d'objet comporte tout autre moyen de conditionnement tel que par exemple un appareil micro-ondes, un équipement de surcongélation. Ainsi, le dispositif de conditionnement en température d'objet selon l'invention peut servir à réchauffer mais également à refroidir un objet. Dans certain cas, le nombre de conditionnement préalablement subi admissible est de un. Dans ces cas, l'objet ne pourra être conditionné qu'une seule fois. Cette configuration particulière sera par exemple utilisée quand un simple conditionnement rend l'objet inapproprié à sa consommation ou utilisation ultérieure.

### Possibilités d'application industrielle

Le dispositif 1 de conditionnement en température selon l'invention peut être utilisé pour conditionner tout type d'objet 2, par exemple des contenants comportant des compositions pour bricolage, pour entretien lorsque ces compositions doivent être utilisées à des températures données différentes de la température ambiante.

Comme détaillé précédemment, ce dispositif 1 peut avantageusement être utilisé pour conditionner des bocaux 2 contenant des préparations alimentaires. Ainsi, les machines de conditionnement 3 peuvent être mises à disposition, par exemple dans des chambres d'hôtels, et les bocaux 2 peuvent être distribués à l'accueil pour permettre à chacun, quelle que soit l'heure, de se préparer un plat chaud.

Il est bien entendu que les exemples décrits ne sont que des illustrations particulières et en aucun cas limitatives des domaines d'application de l'invention. L'Homme de l'art pourra apporter des aménagements de taille, de forme et de matériau à l'exemple de réalisation particulier sans pour autant sortir du cadre de la présente invention tel que défini dans les revendications.

## Revendications

1. Dispositif (1) de conditionnement en température chaude ou froide d'une préparation alimentaire comportant au moins un objet (2) étant un bocal, contenant ladite préparation alimentaire et comportant au moins un marqueur RFID (4), et une machine de conditionnement (3) pourvue de moyens de conditionnement couplés à des moyens de commande et comprenant des moyens de contrôles pourvus d'au moins un récepteur RFID (5) apte à lire des données dudit marqueur RFID (4) et au moins un émetteur RFID apte à émettre un signal d'incrémentation reçu par ledit marqueur RFID (4), lesdits moyens de contrôles étant couplés auxdits moyens de commande et agencés pour n'autoriser le conditionnement de la préparation alimentaire que sous condition de la reconnaissance par ledit récepteur RFID (5) de données portées par ledit marqueur RFID (4) et de la correspondance de ces dernières à des données préétablies enregistrées par lesdits moyens de contrôle, lesdites données portées par ledit marqueur RFID (4) comprenant les informations suivantes :
- l'identification dudit objet (2) et/ou de son contenu,
- la date limite de consommation/d'utilisation dudit objet (2) et/ou de son contenu,
- le nombre de conditionnement(s) préalablement subi(s) par ledit objet (2) au moyen de ladite machine de conditionnement (3) incrémenté par l'émetteur RFID à chaque cycle de conditionnement,
- la provenance dudit objet (2) et/ou de son contenu, et
- le temps de conditionnement recommandé pour ledit objet (2) et son contenu,
lesdits moyens de contrôle dudit dispositif comportant au moins une horloge interne et étant agencés pour interdire la mise en marche desdits moyens de conditionnement lorsque ledit nombre de conditionnement(s) préalablement subi(s) dudit objet (2) a atteint une valeur prédéterminée enregistrée par lesdits moyens de contrôle ou lorsque la date du jour d'utilisation de ladite machine de conditionnement (3) détectée par ledit récepteur RFID (5) a dépassé ladite date de limite de consommation portée par le marqueur RFID (4) dudit objet (2) de sorte à contrôler l'utilisation de ladite machine de conditionnement (3) afin de garantir la qualité et la provenance desdites préparations alimentaires à conditionner.

2. Dispositif (1) selon la revendication précédente, **caractérisé en ce que** ledit objet (2) est pourvu d'au moins une étiquette comportant ledit marqueur RFID (4).

3. Dispositif (1) selon l'une quelconque des revendications 1 ou 2, **caractérisé en ce que** ledit objet (2) comporte au moins un marqueur RFID (4) intégré audit objet (2).

4. Dispositif (1) selon l'une quelconque des revendications 1 à 3, **caractérisé en ce que** lesdits moyens de conditionnement comportent au moins une machine de conditionnement (3) choisie dans le groupe comprenant au moins :
- un cuiseur vapeur,
- un équipement de surcongélation.

5. Dispositif (1) selon l'une quelconque des revendications 1 à 4, **caractérisé en ce que** lesdits moyens de contrôle sont agencés pour faire fonctionner lesdits moyens de conditionnement pendant ledit temps de conditionnement recommandé porté par ledit marqueur RFID (4) dudit objet (2) et détecté par le récepteur RFID (5).

6. Dispositif (1) selon l'une quelconque des revendications 1 à 5, **caractérisé en ce qu'**il comporte une pluralité de machines de conditionnement (3) et une pluralité d'objets (2).

## Patentansprüche

1. Vorrichtung (1) zur Konditionierung unter warmen oder kalten Temperaturen einer Nahrungsmittelzubereitung, zumindest ein Objekt (2) umfassend, das ein Gefäß ist, das die besagte Nahrungsmittelzubereitung enthält und das zumindest ein RFID-Etikett (4) umfasst, und eine Konditioniermaschine (3), die mit Mitteln zum Konditionieren versehen ist, die mit Steuerungsmitteln verbunden sind, und Kontrollmittel umfassen, die mit zumindest einem RFID-Empfänger (5) versehen sind, der imstande ist, die Daten des besagten RFID-Etiketts (4) zu lesen, und zumindest einen RFID-Sender, der imstande ist, ein Inkrementierungssignal zu senden, das vom besagten RFID-Etikett (4) empfangen wird, wobei die besagten Kontrollmittel mit den besagten Steuerungsmitteln verbunden sind und angeordnet sind, um die Konditionierung der Nahrungsmittelzubereitung nur unter der Bedingung zu gestatten, dass der besagte RFID-Empfänger (5) Daten erkennt, die vom besagten RFID-Etikett (4) getragen werden, und dass diese letzteren mit vorerstellten Daten übereinstimmen, die durch die besagten Kontrollmittel gespeichert wurden, wobei die durch das besagte RFID-Etikett (4) getragenen besagten Daten die folgenden Informationen umfassen:
- die Identifizierung des besagten Objekts (2) und/ oder seinen Inhalt,
- das Verbrauchs-/Verfallsdatum des besagten Objekts (2) und/ oder seines Inhalts,
- die Anzahl der vom besagten Objekt (2) zuvor anhand der besagten Konditionierungsmaschine (3) bereits erfahrenen Konditionierung(en), die durch den RFID-Sender bei jedem Konditionierungszyklus inkrementiert wird,
- die Herkunft des besagten Objekts (2) und/ oder seines Inhalts, und
- die empfohlene Konditionierungszeit für das besagte Objekt (2) und seinen Inhalt,
wobei die besagten Kontrollmittel der besagten Vorrichtung zumindest eine interne Uhr umfassen und angeordnet sind, um das Starten der besagten Konditionierungsmittel zu untersagen, wenn die besagte Anzahl der vom besagten Objekt (2) zuvor bereits erfahrenen Konditionierung(en) einen vorbestimmten Wert erreicht hat, der von den besagten Kontrollmitteln gespeichert wird, oder wenn das Datum des Verwendungstages der besagten Konditionierungsmaschine (3), das vom besagten RFID-Empfänger (5) erfasst wird, das besagte Verbrauchsdatum überschritten hat, das vom RFID-Etikett (4) des besagten Objekts (2) getragen wird, um die Verwendung der besagten Konditionierungsmaschine (3) zu kontrollieren, um die Qualität und die Herkunft der besagten zu konditionierenden Nahrungsmittelzubereitungen zu gewährleisten.

2. Vorrichtung (1) nach dem vorherigen Anspruch, **dadurch gekennzeichnet, dass** das besagte Objekt (2) mit zumindest einem Label versehen ist, welches das besagte RFID-Etikett (4) umfasst.

3. Vorrichtung (1) nach einem der Ansprüche 1 oder 2, **dadurch gekennzeichnet, dass** das besagte Objekt (2) zumindest ein RFID-Etikett (4) umfasst, das in das besagte Objekt (2) integriert ist.

4. Vorrichtung (1) nach einem der Ansprüche 1 bis 3, **dadurch gekennzeichnet, dass** die besagten Konditionierungsmittel zumindest eine Konditionierungsmaschine (3) umfassen, die aus der Gruppe ausgewählt wird, die zumindest Folgendes enthält:
- einen Dampfkocher,
- eine Ausrüstung zum Tiefgefrieren.

5. Vorrichtung (1) nach einem der Ansprüche 1 bis 4, **dadurch gekennzeichnet, dass** die Kontrollmittel angeordnet sind, um die besagten Konditionierungsmittel während der besagten empfohlenen Konditionierungszeit, die vom besagten RFID-Etikett (4) des besagten Objekts (2) getragen wird, und vom RFID-Empfänger (5) erfasst wird, zu betreiben.

6. Vorrichtung (1) nach einem der Ansprüche 1 bis 5, **dadurch gekennzeichnet, dass** sie eine Vielzahl von Konditionierungsmaschinen (3) und eine Vielzahl von Objekten (2) umfasst.

## Claims

1. Device (1) for the hot or cold thermal conditioning of a food preparation, comprising at least one object (2) being a jar, containing said food preparation and comprising at least one RFID marker (4), and a conditioning machine (3) provided with conditioning means coupled to control means and comprising command means provided with at least one RFID receiver (5) able to receive data from said RFID marker (4) and at least one RFID emitter able to emit an incrementation signal received by said RFID marker (4), said command means being coupled to said control means and arranged to enable the conditioning of the food preparation only provided that said RFID receiver (5) recognises data carried by said RFID marker (4) and that these data match pre-established data recorded by said control means, said data carried by said RFID marker (4) comprising the following information:
- identification of said object (2) and/or of the content thereof,
- the limit date for consumption/use of said object (2) and/or the content thereof,
- the number of conditioning(s) previously undergone by said object (2) by means of said conditioning machine (3) incremented by the RFID emitter at each conditioning cycle,
- the origin of said object (2) and/or of the content thereof, and
- the conditioning time recommended for said object (2) and the content thereof,
said control means of said device comprising at least one internal clock and being arranged so as to prevent the starting of said conditioning means when said number of conditioning(s) previously undergone by said object (2) has reached a predetermined value recorded by said command means or when the date of the day of use of said conditioning machine (3) detected by said RFID receiver (5) has passed said consumption limit date carried by the RFID marker (4) of said object (2) so as to control the use of said conditioning machine (3) in order to guarantee the quality and origin of said food preparations to be conditioned.

2. Device (1) according to the preceding claim, **characterised in that** said object (2) is provided with at least one label comprising said RFID marker (4).

3. Device (1) according to either one of claims 1 or 2, **characterised in that** said object (2) comprises at least one RFID marker (4) integrated in said object (2).

4. Device (1) according to any of claims 1 to 3, **characterised in that** said conditioning means comprise at least one conditioning machine (3) chosen from the group comprising at least:
- a steam cooker,
- deep-freezing equipment.

5. Device (1) according to any of claims 1 to 4, **characterised in that** said control means are arranged to make said conditioning means operate for said recommended conditioning time carried by said RFID marker (4) of said object (2) and detected by the RFID receiver (5).

6. Device (1) according to any of claims 1 to 5, **characterised in that** it comprises a plurality of conditioning machines (3) and a plurality of objects (2).
